## Europäisches Patentamt
## European Patent Office
## Office européen des brevets

(11) Veröffentlichungsnummer: **0 015 008**
**A2**

(12) # EUROPÄISCHE PATENTANMELDUNG

(21) Anmeldenummer: 80100920.0

(22) Anmeldetag: 25.02.80

(51) Int. Cl.³: **C 03 C 25/02**
**C 04 B 31/06**

(30) Priorität: 26.02.79 DE 2907431

(43) Veröffentlichungstag der Anmeldung:
03.09.80 Patentblatt 80/18

(84) Benannte Vertragsstaaten:
AT BE CH FR GB IT LU NL SE

(71) Anmelder: Werhahn & Nauen
Königstrasse 84
D-4040 Neuss(DE)

(72) Erfinder: Kissing, Wolfgang, Dr.
Gartenstrasse 8
D-6250 Limburg-Linter(DE)

(72) Erfinder: Biehl, Uwe
Saalburgallee 36
D-6000 Frankfurt/Main(DE)

(72) Erfinder: Gaar, Hans
Niederhöchstädter Strasse 18
D-6374 Steinbach(DE)

(72) Erfinder: Gudjons, Jürgen, Dr.
Karl-Ulrich-Strasse 9
D-6360 Friedberg-3 (Dorheim)(DE)

(72) Erfinder: Reiner, Roland, Dr.
Gehspitz 11
D-6236 Eschborn(DE)

(74) Vertreter: Blum, Klaus-Dieter, Dipl.-Ing.
Am Römerhof 35
D-6000 Frankfurt/Main 90(DE)

(54) **Verfahren zur Erhöhung der Alkalibeständigkeit von Glasgegenständen.**

(57) Zur Erhöhung der Alkalibeständigkeit von Gläsern und insbesondere der Zementlaugenbeständigkeit von Glasfasern wird der Glasgegenstand mit einer Metall- und/oder Metalloxidschicht versehen. Die verwendeten Metalle bzw. Metalloxide gehören den Übergangselementen der Gruppen IIIa, IVa und Va des Periodensystems an. Vorzugsweise werden Eisen oder Eisenoxid bzw. Vanadin, Titan, Chrom, Mangan, Kobalt, Zirkon, Kupfer sowie deren Oxide eingesetzt.

EP 0 015 008 A2

0015008

V-63.881-02 - 3/79

CASCH/SUK                                    6. Februar 1980

BATTELLE - INSTITUT E.V., Frankfurt (Main)

=====================================
Verfahren zur Erhöhung der Alkalibeständigkeit von Glasgegenständen
=====================================

Die Erfindung betrifft ein Verfahren zur Erhöhung der Alkalibeständigkeit von Glasgegenständen, insbesondere der Zementlaugenbeständigkeit von Glasfasern, bei dem die Gegenstände
mit einer Beschichtung auf Metallbasis versehen werden.

Die Festigkeit von Zement-, Mörtel- und Betonteilen gegen
Zug, Biegung und Schlag ist im allgemeinen nicht zufriedenstellend. Durch Zusatz von z.B. Glasfasern kann eine genügende Festigkeit erzielt werden. Diese Glasfasern werden
jedoch durch die hohe Alkalität des Zementes so stark angegriffen, daß die verstärkende Wirkung nach einiger Zeit
ganz aufgehoben ist.

Zur Erhöhung der Korrosionsfestigkeit werden die als Zuschlagstoffe für Zement dienenden Glasfasern z.B. mit Kunststoff überzogen. Diese Kunststoffbeschichtungen besitzen jedoch nur eine schlechte Haftung zur Glasoberfläche. Hinzu kommt, daß der Überzug nicht auf Dauer dicht bleibt.

Anstelle von normalerweise als Zuschlagstoffe verwendeten Glasfasern aus A- und E-Glas können auch Fasern aus alkalibeständigen Gläsern, z.B. aus dem System $Na_2O_2$-$ZrO_2$-$SiO_2$, eingesetzt werden.

Solche Fasern werden zwar weit weniger als A-/E-Glas angegriffen, jedoch tritt lediglich eine Verzögerung der Zerstörung ein. Außerdem besteht der Nachteil, daß diese Gläser bedeutend schwieriger geschmolzen und zu Fasern gezogen werden können als A-/E-Glas.

Ferner ist bekannt, die Oberfläche der Glasfasern mit Beschichtungen auf Metallbasis zu versehen, um eine genügende Zementlaugenbeständigkeit zu erhalten. So wird z.B. mit Salzlösungen von Beryllium, Zirkonium, Wismut, Cadmium, Magnesium, Lanthan und Mangan eine gewisse Schutzwirkung bei Glasfasern erzielt.(Inorganic Materials, 8 (1972), 1332 - 1334; DE-OS 2402 661). Die Aufbringung von Salzlösungen genannter Metalle führt jedoch nicht zu erwünschten Ergebnissen, da die so behandelten Glasfasern auf die Dauer keine genügende Zementlaugenresistenz aufweisen.

0015008

Zur Vermeidung dieser Nachteile wird ferner vorgeschlagen, Zinkverbindungen auf Glasfasern zusammen mit einem Schlichtemittel abzuscheiden (DE-OS 24 03 751). Die verwendeten organischen Schlichten sollen die auf die Fasern aufgezogenen Zinkverbindungen vor Abrieb schützen, führen aber dazu, daß die Beschichtung aus Zinkverbindung nicht genügend fest auf der Glasoberfläche haftet.

Der vorliegenden Erfindung liegt daher die Aufgabe zugrunde, unter Vermeidung der Nachteile bekannter Verfahren die Oberfläche von Glasfasern, die an sich keine Zementlaugenbeständigkeit, aber günstige mechanische Eigenschaften wie hohe Festigkeit und E-Modul aufweisen, dauerhaft resistent gegen den Angriff der Zementlauge zu machen.

Es hat sich nun gezeigt, daß sich diese Aufgabe in technisch fortschrittlicher Weise lösen läßt, wenn die Beschichtung aus mindestens einem in Alkali stabilen, nicht-edlen Metall der Übergangselemente, der Gruppen IIIa, IVa und Va des Periodensystems, einem Oxyd dieser Metalle und/oder Mischungen dieser Metalle und Metalloxyde besteht. Besonders geeignet sind Beschichtungen aus Vanadin, Titan, Chrom, Mangan, Kobalt, Zirkon, Cadmium, Wismut, Cer, Indium, Kupfer, deren Oxyden und/oder deren Mischungen.

Es hat sich gezeigt, daß mit einer Beschichtung aus Eisen. Eisenoxyden und/oder Mischungen des Eisens und Eisenoxyds besonders vorteilhafte Ergebnisse erzielt werden können. Die verwendeten Metalle bzw. deren Oxide müssen bis zu einem pH-Wert von 12 - 13 stabil sein.

Die Aufbringung der Beschichtung auf die Glasoberfläche kann in an sich bekannter Weise nach verschiedenen Methoden erfolgen. Z.B. werden Lösungen von organischen Verbindungen genannter Metalle auf die zu beschichtende Glasoberfläche aufgespritzt. Vorzugsweise ist die Oberfläche zuvor auf eine zur Pyrolyse der Verbindung ausreichende Temperatur erhitzt. So erfolgt ein Verdampfen der Lösungsmittel, Pyrolyse der metallorganischen Verbindung und auf dem Glas bildet sich eine Schicht aus dem erwünschten Metalloxyd.

Wenngleich andere Methoden zur Beschichtung von Glasoberflächen bekannt sind, werden mit dem Zerstäuben einer Lösung der Metallverbindung dünne und gleichmäßige Metalloxydschichten erzielt.

Das nachfolgende Beispiel erläutert das erfindungsgemäße Verfahren.

Beispiel

Eine Lösung von 88,3 g Eisen-III-Acetylacetonat in 500 ml Toluol wird auf eine Glasplatte, die auf eine Temperatur von 600 $^{\circ}$C aufgeheizt wurde, aufgespritzt. Dabei zersetzt sich die organische Eisenverbindung auf der heißen Glasoberfläche und es bildet sich eine gut haftende relativ homogene Oxidschicht auf der Glasoberfläche aus.

Die so behandelten Glasplatten werden auf ihre Laugenbeständigkeit untersucht. Hierzu werden die Glasplättchen mit Aceton entfettet, bis zur Gewichtskonstanz bei 150 $^o$C getrocknet und 24 h an Silberdrähten in ca. 1 l kochende Lauge gehängt. Die Prüflauge besteht aus 1 l dest. Wasser, 0,88 g NaOH  3,45 g KOH und 0,48 g Ca(OH)$_2$. Das Ergebnis wird im folgenden angegeben:

| mg Fe$_2$O$_3$/cm$^2$ | Hydrolyse Gewichtsverlust mg/dm$^2$ |
|---|---|
| 0,00 | 25,4 |
| 0,05 | 5,4 |
| 0,1 | 2,5 |
| 0,16 | 2,4 |

0015008

V-63.881-02 - 3/79

CASCH/SUK

6. Februar 1980

BATTELLE - INSTITUT E.V., Frankfurt (Main)

Patentansprüche

1. Verfahren zur Erhöhung der Alkalibeständigkeit von Glasgegenständen, insbesondere der Zementlaugenbeständigkeit
von Glasfasern, bei dem die Gegenstände mit einer Beschichtung auf Metallbasis versehen werden, dadurch gekennzeichnet, daß die Beschichtung aus mindestens einem,
in Alkali stabilen, nichtedlen Metall der Übergangselemente,
der Gruppen IIIa, IVa und Va des Periodensystems, einem Oxyd
dieser Metalle und/oder Mischungen dieser Metalle und
Metalloxyde besteht.

2. Verfahren nach Anspruch 1, dadurch gekennzeichnet, daß die
Beschichtung aus Vanadin, Titan, Chrom, Mangan, Kobalt,

0015008

Zirkon, Cadmium, Wismut, Cer, Indium, Kupfer, deren Oxyden und/oder deren Mischungen besteht.

3. Verfahren nach Anspruch 1, <u>dadurch gekennzeichnet</u>, daß die Beschichtung aus Eisen, Eisenoxyden und/oder Mischungen des Eisens und Eisenoxyds besteht.